# FASCICULE DE BREVET EUROPEEN

(11) **EP 3 894 295 B1**
(45) Date de publication et mention de la délivrance du brevet: **08.05.2024**
(21) Numéro de dépôt: 19868201.5
(22) Date de dépôt: 02.12.2019
(51) Int. Cl.: B60W 30/095, B60W 30/18, G05D 1/02, B60W 30/16, B60W 50/00, B60W 60/00

(54) **CONDUITE AUTONOME SÉCURISÉE DANS LE CAS D'UNE DÉTECTION D'UN OBJET CIBLE**
SICHERES AUTONOMES FAHREN IM FALL DER DETEKTION EINES ZIELOBJEKTS
SECURE AUTONOMOUS DRIVING IN THE EVENT OF A DETECTION OF A TARGET OBJECT

(30) Priorité: 13.12.2018 FR 1872876
(43) Date de publication de la demande: 20.10.2021
(73) Titulaire: Stellantis Auto SAS, 78300 Poissy (FR)
(72) Inventeur: VIVET, Luc, 75016 Paris 16 (FR); EL HAMDANI, Ahmid, 78140 Velizy Villacoublay (FR); OUANEZAR, Sofiane, 78580 Maule (FR); VARNIER, Matthieu, 78320 La Verriere (FR)
(86) Numéro de dépôt international: PCT/FR2019/052871
(87) Numéro de publication internationale: WO 2020/120868

(56) Documents cités:
- EP-A1- 2 562 060
- DE-A1-102010 020 047
- DE-T5-112015 001 754
- US-A1- 2014 114 548
- US-A1- 2017 274 876

## Description

La présente invention appartient au domaine du véhicule autonome. Elle concerne en particulier un procédé pour sécuriser la conduite d'un véhicule autonome dans le cas où le véhicule autonome est confronté à un objet cible.

Elle est particulièrement avantageuse dans le cas d'un véhicule automobile dont la vitesse est régulée de manière adaptative en suivant l'objet cible.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 1 au niveau 5 dans le barème de l'OICA, pour Organisation International des Constructeurs Automobiles.

Dans la suite, le terme d' « égo-véhicule » est utilisé pour désigner le véhicule dont la conduite autonome est déterminée.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

Une voie peut être délimitée par des marquages au sol mais elle peut également correspondre à une trajectoire sur la chaussée empruntée par les véhicules circulant sur la chaussée. Une telle voie peut être appelée « voie virtuelle » car cette voie n'est pas délimitée par des marquages physiques mais est générée à partir de trajectoires passées empruntées par les véhicules circulant sur la chaussée.

Les véhicules sont fréquemment équipés de régulateurs de vitesse adaptatif. Un régulateur de vitesse adaptatif fonctionne en régulant la vitesse de l'égo-véhicule en fonction, notamment, de la vitesse d'un objet cible (principalement un véhicule cible) précédant l'égo-véhicule dans sa voie. Un régulateur de vitesse adaptatif est aussi connu sous le nom d'ACC, pour Adaptative Cruise Control en anglais, la traduction française étant régulateur de vitesse adaptatif.

On connait de DE 11 2015 001754 un dispositif anticollision. On connait de US 2017/274876 un système et procédé d'évitement de collision latérale pour véhicule. On connait de DE 10 2010 020047 un procédé d'adaptation de la distance de référence d'un véhicule. On connait de US 2014/114548 une méthode de contrôle de la vitesse et/ou de la distance pour les véhicules à moteur.

Lors de la régulation adaptative, notamment, les imprécisions de détection de l'objet cible et les difficultés d'interprétation des mouvements de l'objet cible peuvent rendre hasardeuse la prise de décision quant au suivi par l'égo-véhicule de l'objet cible.

En particulier, de telles imprécision et erreur peuvent conduire à des freinages brusques non-justifiés (faux positif) ou, pire, à une collision avec l'objet cible (faux négatif).

La présente invention vient améliorer la situation.

A cet effet, un premier aspect de l'invention concerne un procédé de conduite autonome d'un véhicule, appelé égo-véhicule, pour la prise en compte d'une détection d'un objet cible, comprenant les étapes de :
▪ obtention de données d'au moins un capteur de l'égo-véhicule, lesdites données comprenant une information de présence de l'objet cible ;
▪ calcul d'un indicateur de présence configuré pour quantifier la probabilité de présence de l'objet cible sur une trajectoire de l'égo-véhicule ;
▪ calcul d'un indicateur de cohérence configuré pour quantifier la prédictibilité du mouvement de l'objet cible ;
▪ si l'indicateur de présence est inférieur à une deuxième valeur prédéterminée, génération d'une deuxième instruction de conduite configurée pour réduire la vitesse de l'égo-véhicule ;
▪ si l'indicateur de cohérence est inférieur à une première valeur prédéterminée, génération d'une première instruction de conduite configurée pour augmenter la distance entre l'objet cible et l'égo-véhicule.

Le traitement des données de capteur(s) est donc avantageusement adapté aux exigences fonctionnelles spécifiques de la conduite d'un véhicule autonome.

D'une part, la prise en compte de l'indicateur de présence de l'objet cible réduit les conséquences et les occurrences des faux positifs / négatifs. La réduction de la vitesse est particulièrement adaptée à un indicateur de présence faible. En effet, les probabilités d'apparition de l'objet cible à des positions imprévisibles rend très pertinent la réduction de vitesse car elle améliore l'efficacité des procédures d'évitement ou de freinage fort.

D'autre part, la prise en compte de la cohérence du mouvement de l'objet évite qu'un objet cible parfaitement détecté mais au comportement imprévisible soit pris de manière inconsidéré comme cible pour une conduite autonome (régulation adaptative de vitesse, définition de voies virtuelles, etc.).

Surtout, les marges de sécurité prévues par la prise en compte combinée des indicateurs de présence et de cohérence présentent le meilleur compromis pour assurer la sécurité de la conduite autonome fondée sur une détection d'un objet cible.

En particulier, combiner une réduction de vitesse pour un indicateur de présence faible et une augmentation de la distance entre objet cible et égo-véhicule pour un indicateur de cohérence faible améliore sensiblement la sécurité dans les cas où se combinent mauvaise perception (indicateur de présence) et mauvaise prédictibilité (indicateur de cohérence). En effet, dans ces situations, la prise compte combinée des deux indicateurs double les effets sécuritaire en garantissant un freinage prenant en compte tous les risques associés à l'objet cible.

A l'inverse, dans les situations plus favorables, la combinaison de la prise en compte des deux indicateurs améliore le confort de la conduite autonome. En effet, dans les situations où l'objet cible est détecté de manière certaine (indicateur de présence élevé) mais où son comportement n'est pas prédictible (indicateur de cohérence faible), l'augmentation de la distance sans réduction de vitesse rend possible un niveau de sécurité correct (des mouvements imprévus de la cible restent évitables) sans impacter l'efficacité de la conduite autonome (la vitesse n'est pas réduite).

On entend par « indicateur de présence » toute donnée caractéristique d'une présence d'un objet. En particulier, au moins une valeur numérique pour laquelle une valeur importante témoigne d'une forte probabilité de présence de l'objet et une valeur faible témoigne d'une faible probabilité de présence de l'objet est un exemple d'indicateur de présence.

On entend par « réduire la vitesse de l'égo-véhicule » toute réduction de la vitesse de l'égo-véhicule, par rapport à n'importe quel référentiel. Ainsi, la réduction de la vitesse de l'égo-véhicule peut-être faite par rapport à la vitesse de l'objet cible, sans que la vitesse de l'égo-véhicule ne soit forcément réduite dans le référentiel terrestre (cas d'une accélération de l'objet cible).

Dans un mode de réalisation, l'étape de calcul de l'indicateur de présence comporte les sous-étapes de :
∘estimation d'une trajectoire de l'égo-véhicule ;
∘calcul d'un indicateur instantané de présence de l'objet cible à partir desdites données du capteur et de ladite trajectoire de l'égo-véhicule estimée ;
o détermination de l'indicateur de présence à partir de l'indicateur instantané de présence et d'un historique d'indicateurs de présence.

D'une part, l'indicateur de présence consolidé dépend de la trajectoire de l'égo-véhicule. Les fausses détections hors trajectoire sont donc filtrées. Dans un mode de réalisation, un tel filtrage est continu (prise en compte progressive en fonction de la proximité de la trajectoire) ou, dans un autre mode de réalisation, discret (binaire ; prise en compte ou non, ou par niveaux discrets ; nombre donné de niveaux de prise en compte).

D'autre part, l'indicateur de présence est consolidé par la prise en compte de l'historique des indicateurs consolidés précédents. Dès lors, toutes les fausses détection (faux positifs) sont lissées par l'historique. Par exemple, dans un mode de réalisation, l'apparition subite d'un objet à un instant donné sans que l'objet n'ait jamais été détecté précédemment est écartée pour la génération de l'instruction de conduite autonome.

Les effets techniques de filtrage des détections hors trajectoire et de filtrage des détections non précédemment détectées se combinent pour avoir pour, notamment, un effet synergique d'introduction d'une vérification de cohérence. En effet, seule une détection stable et sur la trajectoire de l'égo-véhicule garantie qu'une cible pertinente est présente. Ainsi, par exemple, toutes les situations où un véhicule se déporte légèrement et de manière périodique (typiquement pour laisser passer des deux roues circulant entre les voies) dans la voie de l'égo-véhicule sont filtrées.

Un deuxième effet synergique est lié à l'apparition d'erreurs de détection stables hors trajectoire. En effet, de nombreux capteurs en charge de la conduite autonome sont situés face à la route, vers l'avant. Ainsi, lors des situations de projections sur ces capteurs (pluie, neige, boues, humidités, etc.), les gouttes vont statistiquement se concentrer hors du champ des capteurs correspondant à la trajectoire. Par exemple, les gouttes se concentrent sur les côtés de l'objectif d'une caméra, le centre (éventuellement décentré pour des accélération latérales importantes) étant relativement préservé des gouttes par le vent apparent.

Dans un mode de réalisation, si l'indicateur de cohérence est inférieur à une troisième valeur prédéterminée, la première instruction conduite est configurée pour maintenir la distance entre l'objet cible et l'égo-véhicule constante. La situation où la distance entre l'objet cible et l'égo-véhicule est telle que l'objet cible n'est plus correctement détectable est ainsi avantageusement évitée.

Dans un mode de réalisation, la distance entre l'objet cible et l'égo-véhicule constante est égale à deux fois la distance entre l'objet cible et l'égo-véhicule constante lorsque l'indicateur de cohérence est supérieur à la première valeur prédéterminée. Une telle distance présente le meilleur compromis entre sécurité et disponibilité (une distance trop importante réduit la disponibilité de la conduite autonome en cas de trafic important).

Dans un mode de réalisation, l'indicateur de cohérence mesure l'un au moins des éléments parmi :
∘une concordance de la trajectoire de l'objet cible à au moins un modèle cinématique prédéterminé. Le calcul de l'indicateur de cohérence est ainsi simple tout en garantissant un bon niveau d'efficacité.
∘une correspondance de la trajectoire de l'objet cible avec une trajectoire d'une route sur laquelle évolue l'égo-véhicule. L'indicateur de cohérence ainsi calculé mesure avec une grande précision la prédictibilité du mouvement de l'objet cible ;
∘une proximité entre la trajectoire de l'objet cible et la trajectoire de l'égo-véhicule ;
∘une durée entre un premier moment où l'objet cible a été détecté et un instant présent.

Un deuxième aspect de l'invention vise un programme informatique comportant des instructions pour la mise en oeuvre du procédé selon le premier aspect de l'invention, lorsque ces instructions sont exécutées par un processeur.

Un troisième aspect de l'invention vise un dispositif de conduite autonome d'un véhicule, appelé égo-véhicule, pour la prise en compte d'une détection d'un objet cible, le dispositif comprenant au moins un processeur et au moins une mémoire agencés pour effectuer les opérations de :
▪ obtention de données d'au moins un capteur de l'égo-véhicule, lesdites données comprenant une information de présence de l'objet cible ;
▪ calcul d'un indicateur de présence configuré pour quantifier la probabilité de présence de l'objet cible sur une trajectoire de l'égo-véhicule ;
▪ calcul d'un indicateur de cohérence configuré pour quantifier la prédictibilité du mouvement de l'objet cible ;
▪ si l'indicateur de présence est inférieur à une deuxième valeur prédéterminée, génération d'une deuxième instruction de conduite configurée pour réduire la vitesse de l'égo-véhicule ;
▪ si l'indicateur de cohérence est inférieur à une première valeur prédéterminée, génération d'une première instruction de conduite configurée pour augmenter la distance entre l'objet cible et l'égo-véhicule.

Un quatrième aspect de l'invention vise un véhicule comportant le dispositif selon le troisième aspect de l'invention.

Les dessins annexés illustrent l'invention :
[Fig. 1] illustre un contexte d'application de l'invention ;
[Fig. 2] illustre un procédé selon un mode de réalisation de l'invention ;
[Fig. 3] illustre un procédé selon un mode de réalisation de l'invention ;
[Fig. 4] illustre des valeurs pouvant être choisies selon un mode de réalisation de l'invention ;
[Fig. 5] illustre des valeurs pouvant être choisies selon un mode de réalisation de l'invention ;
[Fig. 6] illustre un dispositif, selon un mode de réalisation de l'invention.

L'invention est décrite ci-après dans son application, non limitative, au cas d'un véhicule automobile autonome circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

En outre, l'invention est décrite ci-après pour la détermination d'une grandeur relative au mouvement longitudinal de l'égo-véhicule dans le cadre de la détermination d'une cible pour le régulateur de vitesse adaptatif. D'autres applications de la détermination d'une telle grandeur sont également envisageable, en dehors de la régulation adaptative d'un égo-véhicule. Par exemple, une telle grandeur peut être déterminée comme l'une des grandeurs de consigne pour la conduite autonome de l'égo-véhicule.

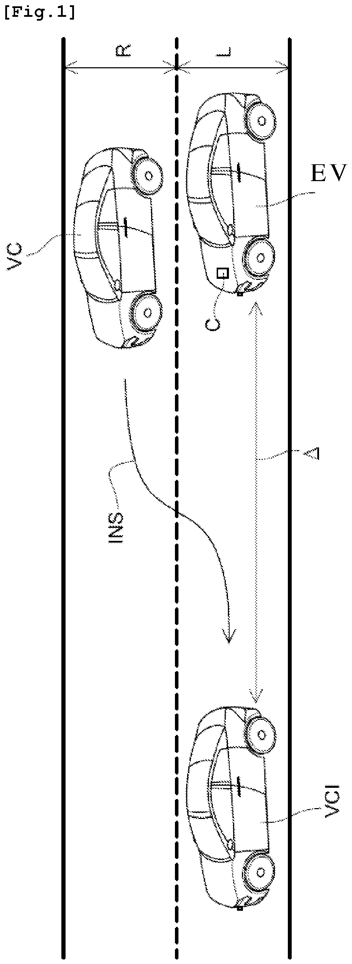

La **figure 1** illustre une chaussée d'autoroute comportant deux voies, une voie de gauche L et une voie de droite R présentant le même sens de circulation (du bas vers le haut de la figure). La voie gauche L comporte un égo-véhicule EV, un véhicule cible initial VCI et un objet cible VC.

Dans la situation ici décrite à la figure 1, l'égo-véhicule EV utilise un régulateur de vitesse adaptatif ayant pour cible le véhicule cible initial VCI. En particulier, et bien que de nombreux procédés de régulation adaptative de vitesse soient disponibles, la régulation adaptative de vitesse peut réguler longitudinalement le mouvement de l'égo-véhicule EV en maintenant une distance Δ entre EV et VCI constante. L'objet cible VC vient alors s'intercaler selon une manoeuvre d'insertion INS entre l'égo-véhicule EV et le véhicule cible initial VCI.

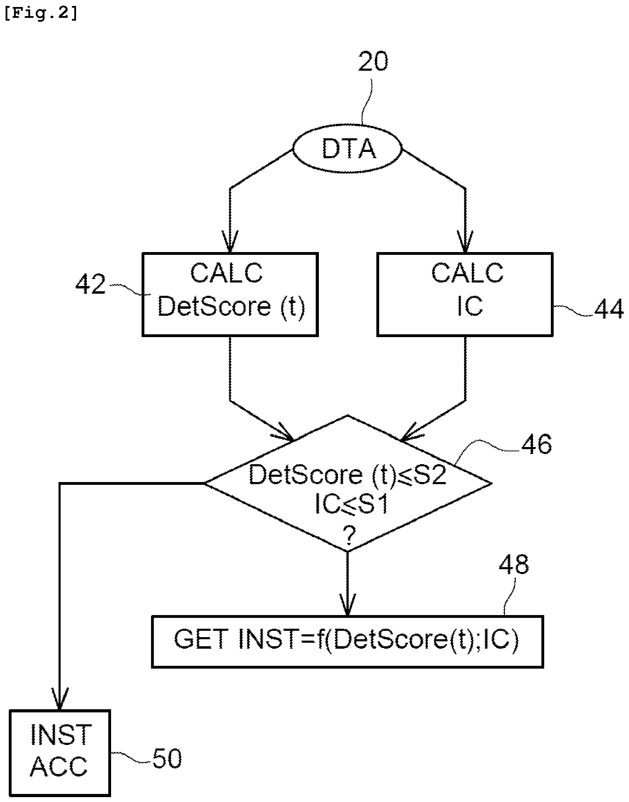

Le procédé selon l'invention, pour lequel un mode de réalisation est décrit ci-après en référence à la figure 2, est relatif au traitement des données du capteur C pour la gestion du mouvement longitudinal de l'égo-véhicule EV subissant l'insertion INS de l'objet cible VC.

La **figure 2** illustre le procédé, selon un mode de réalisation de l'invention.

A une étape 20, des données DTA sont obtenues d'au moins le capteur C de l'égo-véhicule EV.

Le capteur C de l'égo-véhicule est l'un au moins des éléments parmi :
- un radar ;
- un lidar ;
- une caméra, par exemple une caméra vidéo multifonction, CVM ;
- un système de communication configuré pour recevoir des informations d'au moins un autre véhicule, une infrastructure, un terminal utilisateur, etc. ;
- un laser ;
- un système de positionnement par satellite ;
- etc.

Les données brutes acquises par le capteur C sont traitées et font l'objet d'une fusion lorsque plusieurs capteurs sont utilisés.

Les données DTA comprennent une information de présence de l'objet cible VC. Selon le type de capteur C, l'information de présence comprend une distance de VC à EV, une détermination des dimensions / du type / de données de mouvement / etc. de VC, etc.

A une étape 42, un indicateur de présence configuré pour quantifier la probabilité de présence de l'objet cible sur une trajectoire de l'égo-véhicule est calculé.

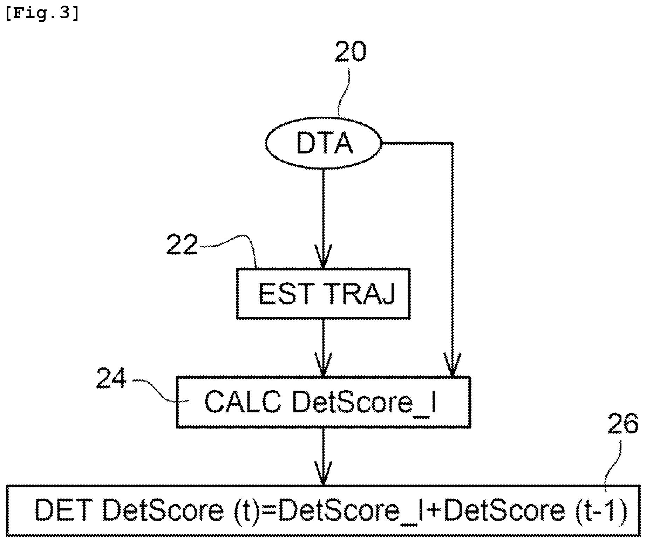

Dans un mode de réalisation, le calcul de l'indicateur de présence DetScore(t) effectué à l'étape 42 est réalisé selon des étapes 22, 24 et 26 ici décrites en référence à la **figure 3****.**

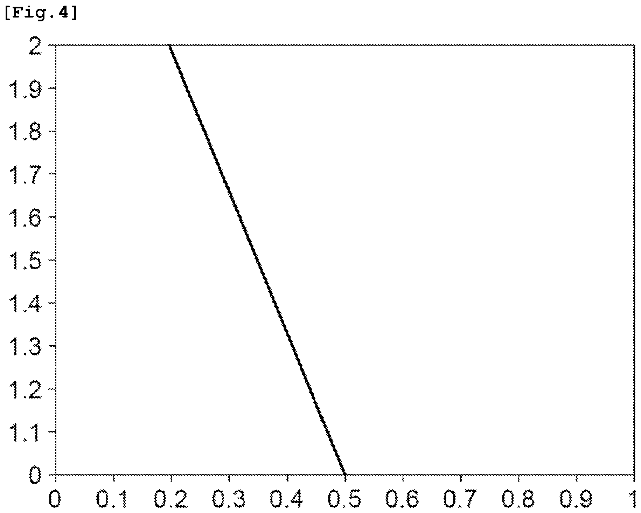

A une étape 22, une trajectoire de l'égo-véhicule EV TRAJ est estimée. Dans une mode de réalisation, la trajectoire TRAJ est estimée à partir de données de mouvement de l'égo-véhicule, de données de position d'une route sur laquelle évolue ledit égo-véhicule et de données de position d'une voie comprise sur ladite route. Les données de mouvement de l'égo-véhicule, les données de position d'une route sur laquelle évolue ledit égo-véhicule et les données de position d'une voie comprise sur ladite route sont obtenues par acquisition par au moins le capteur C et traitement par des composants dédiés, tel que le dispositif D décrit ci-après en référence à la figure 4.

A une étape 24, un indicateur instantané de présence DetScore_I de l'objet cible VC est calculé à partir des données DTA du capteur et de ladite trajectoire TRAJ de l'égo-véhicule estimée à l'étape 22. Le calcul de DetScore_I est choisi pour que les objets cibles situés dans la trajectoire de l'égo-véhicule EV aient un DetScore_I plus élevé que les objets cibles hors trajectoire.

Dans un mode de réalisation, le calcul de l'indicateur instantané de présence DetScore_I est fonction d'une distance s entre l'égo-véhicule et l'objet cible, d'une distance y entre l'objet cible et la trajectoire TRAJ et d'une probabilité d'existence e. La probabilité d'existence est déterminée, dans un mode de réalisation, par des données relatives aux aléas des capteurs, par des méthodes probabiliste et/ou fondées sur des réseaux de neurones utilisant des données provenant de plusieurs capteurs, etc.

Un exemple d'équation de calcul de DetScore_I est : DetScore_I = f(s).g(lyl).h(e) . Avec f, g et h des fonctions. Dans un mode de réalisation, les fonctions f, g et h sont monotones. Dans un mode de réalisation, f est décroissante au moins par morceaux, g est décroissante au moins par morceaux et h est croissante au moins par morceaux.

A une étape 26, un indicateur de présence consolidé DetScore(t) à un instant t est déterminé à partir de l'indicateur instantané de présence DetScore_I et d'un historique d'indicateurs de présence consolidés.

Sur la figure 2, le calcul DetScore(t) = DetScore_I + DetScore(t-1) est mentionné. Il ne s'agit que d'une représentation mathématique d'un mode réalisation dans laquelle DetScore_I est sommé avec l'indicateur de présence consolidé à l'instant t-1 (-1 correspondant à -1 seconde dans un mode de réalisation) ; DetScore(t-1). Ainsi, dans ce mode de réalisation, l'indicateur de présence consolidé est déterminé à partir de l'indicateur instantané de présence à l'instant donné t et de l'historique d'indicateurs de présence consolidés comprenant au moins un indicateur de présence consolidé à un instant t-1 précédant l'instant donné t.

Dans d'autres modes de réalisation, d'autres calculs sont envisagés tels que par exemple DetScore(t) = DetScore_I + [moyenne (DetScore(k), k entier allant de t-10 à t-1)], DetScore(t) = (p*DetScore_I + g*DetScore(t-1))/(p+g) avec p et g des entiers, etc.

A une étape 44, un calcul d'un indicateur de cohérence IC est calculé. L'indicateur de cohérence est configuré pour quantifier la prédictibilité du mouvement de l'objet cible. Selon les modes de réalisation, l'indicateur de cohérence mesure l'un au moins des éléments parmi :
o une concordance de la trajectoire de l'objet cible à au moins un modèle cinématique prédéterminé. Dans un mode de réalisation, le calcul d'IC comprend une détermination d'un modèle cinématique parmi une pluralité de modèles cinématiques prédéterminées, la détermination étant faite à partir d'un historique de données relatives à la position et/ou au mouvement de l'objet cible. Une fois la détermination faite, une valeur d'écart au modèle déterminé est calculée (par exemple valeur moyenne de la distance à la trajectoire correspondant au modèle). Cette valeur d'écart est ensuite utilisée, éventuellement pondérée en fonction des modèles, pour le calcul d'IC.
∘une correspondance de la trajectoire de l'objet cible avec une trajectoire d'une route sur laquelle évolue l'égo-véhicule. Dans ce mode de réalisation, la trajectoire est typiquement récupérée d'une cartographie stockée dans une mémoire du véhicule ou récupérer depuis une base de données distante. Une fois la trajectoire de la route récupérée, une valeur d'écart à la trajectoire est calculée (par exemple valeur moyenne de la distance à la trajectoire). Cette valeur d'écart est ensuite utilisée, éventuellement pondérée en fonction du type de route, pour le calcul d'IC.
∘une proximité entre la trajectoire de l'objet cible et la trajectoire de l'égo-véhicule ;
∘une durée entre un premier moment où l'objet cible a été détecté et un instant présent.

A une étape 46, il est vérifié si l'indicateur de présence DetScore(t) est inférieur à une deuxième valeur prédéterminée S2 et si l'indicateur de cohérence IC est inférieur à une première valeur prédéterminée S1. Dans un mode de réalisation, pour des valeurs d'indicateurs de présence et de cohérence comprises entre 0 et 1, la deuxième valeur prédéterminée est comprise entre 0,8 et 1 et la première valeur prédéterminée est comprise entre 0,4 et 0,6. Par exemple, pour des valeurs d'indicateurs de présence et de cohérence comprises entre 0 et 1, la deuxième valeur prédéterminée est égale à 1 et la première valeur prédéterminée est égale à 0,5.

Si les tests effectués à l'étape 46 indiquent que DetScore(t) est supérieur à S2 et IC est supérieur à S1, une étape 50 est mise en oeuvre dans laquelle une instruction de conduite est générée. Dans un mode de réalisation, l'instruction de conduite générée à l'étape 50 ne dépend pas de DetScore(t) et/ou d'IC.

Sinon, à une étape 48, si l'indicateur de présence est inférieur à une deuxième valeur prédéterminée, génération d'une deuxième instruction de conduite configurée pour réduire la vitesse de l'égo-véhicule et si l'indicateur de cohérence est inférieur à une première valeur prédéterminée, génération d'une première instruction de conduite configurée pour augmenter la distance entre l'objet cible et l'égo-véhicule. Dans un mode de réalisation, la première et la deuxième instruction de conduite sont regroupées pour que soit générée une instruction de conduite INST, fonction de DetScore(t) et d'IC.

En particulier, dans un mode de réalisation, la deuxième instruction de conduite est configurée pour réduire la vitesse de l'égo-véhicule EV par rapport à la vitesse de l'objet cible VC en fonction de DetScore(t) selon la fonction représentée à la **figure 4****.** Ainsi, sur la figure 4, l'axe des abscisses représente la valeur de DetScore(t) et l'axe des ordonnées la valeur de la vitesse de l'objet cible VC par rapport à la valeur de la vitesse de l'égo-véhicule EV.

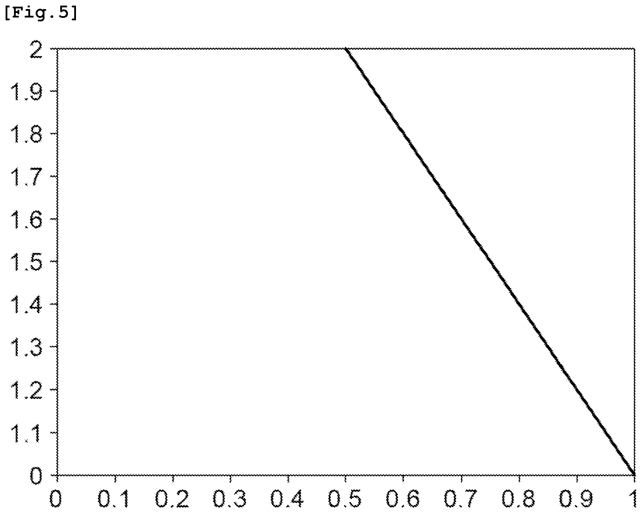

Dans un mode de réalisation, la première instruction de conduite est configurée pour augmenter la distance entre l'objet cible VC et l'égo-véhicule EV en fonction de IC selon la fonction représentée à la **figure 5**. Ainsi, sur la figure 5, l'axe des abscisses représente la valeur de IC et l'axe des ordonnées l'écart entre la distance requise et la distance standard. Par exemple, pour IC = 0,2, la première instruction de conduite est configurée pour que la distance entre VC et EV soit deux fois supérieure à la distance standard entre VC et EV.

Dans un mode réalisation, et comme décrit comme exemple d'application dans la présente description, l'instruction de conduite autonome comprend une instruction de régulation adaptative de la vitesse de l'égo-véhicule, la régulation adaptative étant configurée pour prendre en compte un suivi de l'objet cible conformément aux précisions données ci-avant en référence à l'étape 48.

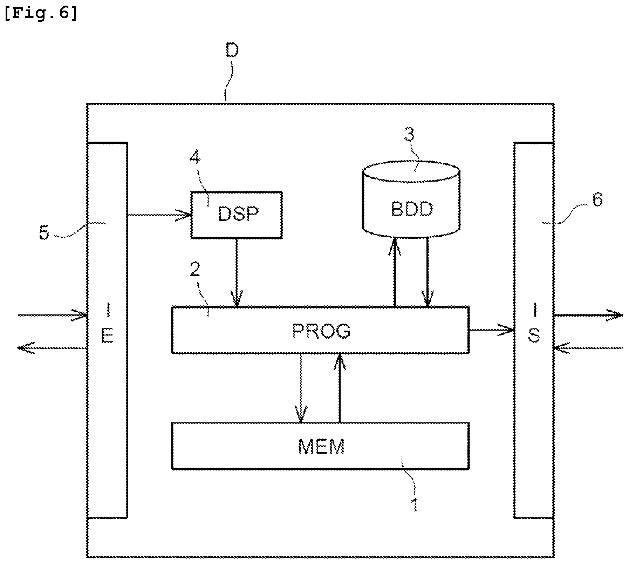

La **figure 6** représente un exemple de dispositif D compris dans l'égo-véhicule EV. Ce dispositif D peut être utilisé en tant que dispositif centralisé en charge d'au moins certaines étapes du procédé décrit ci-avant en référence à la figure 2 et/ou à la figure 3.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes.

Ainsi, on a décrit ci-avant un exemple de réalisation dans lequel l'égo-véhicule évoluait sur une autoroute comporte deux chaussées de deux voies, les chaussées étant séparées par un terre-plein central. L'invention peut également être mise en oeuvre pour d'autres types de routes, tels que des routes nationales à chaussée unique comportant deux voies, des autoroutes à chaussées séparées, chaque chaussée comprenant 6 voies, etc.

De plus, on a décrit un mode de réalisation dans lequel l'invention était décrite dans le cadre de l'application à la régulation adaptative de vitesse. L'invention n'est pas limitée à une telle application et peut être mise en oeuvre par exemple pour des procédés / dispositifs de maintien dans la voie ou encore de prise de décision pour le changement de voie.

Des équations et calculs ont en outre été détaillés. L'invention n'est pas limitée à la forme de ces équations et calcul, et s'étend à tout type d'autre forme mathématiquement équivalente.

## Revendications

1. Procédé de conduite autonome d'un véhicule, appelé égo-véhicule (EV), pour la prise en compte d'une détection d'un objet cible, comprenant les étapes de :
▪ Obtention (20) de données d'au moins un capteur de l'égo-véhicule, lesdites données comprenant une information de présence de l'objet cible ;
▪ Calcul (42) d'un indicateur de présence configuré pour quantifier la probabilité de présence de l'objet cible sur une trajectoire de l'égo-véhicule ;
▪ Calcul (44) d'un indicateur de cohérence configuré pour quantifier la prédictibilité du mouvement de l'objet cible ;
▪ si l'indicateur de présence est inférieur à une deuxième valeur prédéterminée, génération (48) d'une deuxième instruction de conduite configurée pour réduire la vitesse de l'égo-véhicule ;
▪ si l'indicateur de cohérence est inférieur à une première valeur prédéterminée, génération (48) d'une première instruction de conduite configurée pour augmenter la distance entre l'objet cible et l'égo-véhicule.

2. Procédé selon la revendication 1, dans lequel l'étape de calcul de l'indicateur de présence comporte les sous-étapes de :
o Estimation (22) d'une trajectoire de l'égo-véhicule ;
o Calcul (24) d'un indicateur instantané de présence de l'objet cible à partir desdites données du capteur et de ladite trajectoire de l'égo-véhicule estimée ;
o Détermination (26) de l'indicateur de présence à partir de l'indicateur instantané de présence et d'un historique d'indicateurs de présence.

3. Procédé selon l'une des revendications précédentes, dans lequel si l'indicateur de cohérence est inférieur à une troisième valeur prédéterminée, la première instruction conduite est configurée pour maintenir la distance entre l'objet cible et l'égo-véhicule constante.

4. Procédé selon la revendication 3, dans lequel la distance entre l'objet cible et l'égo-véhicule constante est égale à deux fois la distance entre l'objet cible et l'égo-véhicule constante lorsque l'indicateur de cohérence est supérieur à la première valeur prédéterminée.

5. Procédé selon l'une des revendications précédentes, dans lequel l'indicateur de cohérence mesure l'un au moins des éléments parmi :
∘une concordance de la trajectoire de l'objet cible à au moins un modèle cinématique prédéterminé ;
∘une correspondance de la trajectoire de l'objet cible avec une trajectoire d'une route sur laquelle évolue l'égo-véhicule ;
∘une proximité entre la trajectoire de l'objet cible et la trajectoire de l'égo-véhicule ;
∘une durée entre un premier moment où l'objet cible a été détecté et un instant présent.

6. Programme informatique comportant des instructions pour la mise en oeuvre du procédé selon l'une quelconque des revendications précédentes, lorsque ces instructions sont exécutées par un processeur (2).

7. Dispositif (D) de conduite autonome d'un véhicule, appelé égo-véhicule (EV), pour la prise en compte d'une détection d'un objet cible, le dispositif comprenant au moins un processeur et au moins une mémoire agencés pour effectuer les opérations de :
▪ obtention de données d'au moins un capteur de l'égo-véhicule, lesdites données comprenant une information de présence de l'objet cible ;
▪ calcul d'un indicateur de présence configuré pour quantifier la probabilité de présence de l'objet cible sur une trajectoire de l'égo-véhicule ;
▪ calcul d'un indicateur de cohérence configuré pour quantifier la prédictibilité du mouvement de l'objet cible ;
▪ si l'indicateur de présence est inférieur à une deuxième valeur prédéterminée, génération d'une deuxième instruction de conduite configurée pour réduire la vitesse de l'égo-véhicule ;
▪ si l'indicateur de cohérence est inférieur à une première valeur prédéterminée, génération d'une première instruction de conduite configurée pour augmenter la distance entre l'objet cible et l'égo-véhicule.

8. Véhicule (EV) comportant le capteur et le dispositif selon la revendication 7.

## Patentansprüche

1. Verfahren zum autonomen Fahren eines Fahrzeugs, genannt Ego-Vehicle (EV), zur Berücksichtigung der Erkennung eines Zielobjekts, umfassend die Schritte:
• Erhalten (20) von Daten von mindestens einem Sensor des Ego-Fahrzeugs, wobei die Daten Informationen über die Anwesenheit des Zielobjekts umfassen;
• Berechnung (42) eines Anwesenheitsindikators, der dazu konfiguriert ist, die Wahrscheinlichkeit der Anwesenheit des Zielobjekts auf einer Trajektorie des Ego-Fahrzeugs zu quantifizieren;
• Berechnung (44) eines Kohärenzindikators, der dazu konfiguriert ist, die Vorhersagbarkeit der Bewegung des Zielobjekts zu quantifizieren;
• wenn der Anwesenheitsindikator kleiner als ein zweiter vorgegebener Wert ist, Erzeugen (48) einer zweiten Fahranweisung, die dazu ausgelegt ist, die Geschwindigkeit des Ego-Fahrzeugs zu reduzieren;
• wenn der Kohärenzindikator kleiner als ein erster vorgegebener Wert ist, Erzeugen (48) einer ersten Fahranweisung, die dazu ausgelegt ist, den Abstand zwischen dem Zielobjekt und dem Ego-Fahrzeug zu vergrößern.

2. Verfahren nach Anspruch 1, bei dem der Schritt des Berechnens des Anwesenheitsindikators die Teilschritte umfasst:
o Schätzung (22) einer Trajektorie des Ego-Fahrzeugs;
o Berechnung (24) eines momentanen Indikators für die Anwesenheit des Zielobjekts aus den Sensordaten und der geschätzten Flugbahn des Ego-Fahrzeugs;
o Ermittlung (26) des Präsenzindikators aus dem momentanen Präsenzindikator und einer Historie der Präsenzindikatoren.

3. Verfahren nach einem der vorhergehenden Ansprüche, bei dem, wenn der Kohärenzindikator kleiner als ein dritter vorgegebener Wert ist, die erste ausgeführte Anweisung dazu ausgelegt ist, den Abstand zwischen dem Zielobjekt und dem Ego-Fahrzeug konstant zu halten.

4. Verfahren nach Anspruch 3, bei dem der Abstand zwischen dem Zielobjekt und dem konstanten Ego-Fahrzeug gleich dem Doppelten des Abstands zwischen dem Zielobjekt und dem konstanten Ego-Fahrzeug ist, wenn der Kohärenzindikator größer als der erste vorgegebene Wert ist.

5. Verfahren nach einem der vorhergehenden Ansprüche, bei dem der Konsistenzindikator mindestens eines der Elemente misst unter:
o eine Übereinstimmung der Flugbahn des Zielobjekts mit mindestens einem vorgegebenen kinematischen Modell;
o eine Übereinstimmung der Trajektorie des Zielobjekts mit einer Trajektorie einer Straße, auf der das Ego-Fahrzeug fährt;
o eine Nähe zwischen der Flugbahn des Zielobjekts und der Flugbahn des Ego-Fahrzeugs;
o eine Zeitspanne zwischen einem ersten Moment, in dem das Zielobjekt erkannt wurde, und einem gegenwärtigen Moment.

6. Computerprogramm mit Anweisungen zur Durchführung des Verfahrens nach einem der vorhergehenden Ansprüche, wenn diese Anweisungen von einem Prozessor (2) ausgeführt werden.

7. Vorrichtung (D) zum autonomen Fahren eines Fahrzeugs, genannt Ego-Fahrzeug (EV), zur Berücksichtigung der Erkennung eines Zielobjekts, wobei die Vorrichtung mindestens einen Prozessor und mindestens einen Speicher umfasst, der zur Ausführung der Operationen von eingerichtet ist :
• Erhalten von Daten von mindestens einem Sensor des Ego-Fahrzeugs, wobei diese Daten Informationen über die Anwesenheit des Zielobjekts umfassen;
• Berechnung eines Anwesenheitsindikators, der dazu konfiguriert ist, die Wahrscheinlichkeit der Anwesenheit des Zielobjekts auf einer Flugbahn des Ego-Fahrzeugs zu quantifizieren;
• Berechnung eines Kohärenzindikators, der zur Quantifizierung der Vorhersagbarkeit der Bewegung des Zielobjekts konfiguriert ist;
• wenn der Anwesenheitsindikator kleiner als ein zweiter vorgegebener Wert ist, Generieren einer zweiten Fahranweisung, die dazu ausgelegt ist, die Geschwindigkeit des Ego-Fahrzeugs zu reduzieren;
• wenn der Kohärenzindikator kleiner als ein erster vorgegebener Wert ist, Erzeugen einer ersten Fahranweisung, die dazu ausgelegt ist, den Abstand zwischen dem Zielobjekt und dem Ego-Fahrzeug zu vergrößern.

8. Fahrzeug (EV), umfassend den Sensor und die Vorrichtung nach Anspruch 7.

## Claims

1. Method for autonomous driving of a vehicle, called ego-vehicle (EV), for taking into account the detection of a target object, comprising the steps of:
• Obtaining (20) data from at least one sensor of the ego-vehicle, said data comprising information on the presence of the target object;
• Calculation (42) of a presence indicator configured to quantify the probability of presence of the target object on a trajectory of the ego-vehicle;
• Calculation (44) of a coherence indicator configured to quantify the predictability of the movement of the target object;
• if the presence indicator is less than a second predetermined value, generation (48) of a second driving instruction configured to reduce the speed of the ego-vehicle;
• if the coherence indicator is less than a first predetermined value, generation (48) of a first driving instruction configured to increase the distance between the target object and the ego-vehicle.

2. Method according to claim 1, in which the step of calculating the presence indicator comprises the substeps of:
o Estimation (22) of a trajectory of the ego-vehicle;
o Calculation (24) of an instantaneous indicator of the presence of the target object from said sensor data and said estimated trajectory of the ego-vehicle;
o Determination (26) of the presence indicator from the instantaneous presence indicator and a history of presence indicators.

3. Method according to one of the preceding claims, in which if the coherence indicator is less than a third predetermined value, the first instruction conducted is configured to keep the distance between the target object and the ego-vehicle constant.

4. Method according to claim 3, in which the distance between the target object and the constant ego-vehicle is equal to twice the distance between the target object and the constant ego-vehicle when the coherence indicator is greater than the first predetermined value.

5. Method according to one of the preceding claims, in which the consistency indicator measures at least one of the elements among:
o a match of the trajectory of the target object to at least one predetermined kinematic model;
o a correspondence of the trajectory of the target object with a trajectory of a road on which the ego-vehicle is traveling;
o a proximity between the trajectory of the target object and the trajectory of the ego-vehicle;
o a duration between a first moment when the target object was detected and a present moment.

6. Computer program comprising instructions for implementing the method according to any one of the preceding claims, when these instructions are executed by a processor (2).

7. Device (D) for autonomous driving of a vehicle, called ego-vehicle (EV), for taking into account detection of a target object, the device comprising at least one processor and at least one memory arranged to carry out the operations of:
• obtaining data from at least one sensor of the ego-vehicle, said data comprising information on the presence of the target object;
• calculation of a presence indicator configured to quantify the probability of presence of the target object on a trajectory of the ego-vehicle;
• calculation of a coherence indicator configured to quantify the predictability of the movement of the target object;
• if the presence indicator is less than a second predetermined value, generation of a second driving instruction configured to reduce the speed of the ego-vehicle;
• if the coherence indicator is less than a first predetermined value, generation of a first driving instruction configured to increase the distance between the target object and the ego-vehicle.

8. Vehicle (EV) comprising the sensor and the device according to claim 7.
